## Europäisches Patentamt

## European Patent Office

## Office européen des brevets

(19)

(11) Numéro de publication: **0 023 466**
**B1**

(12)

# FASCICULE DE BREVET EUROPEEN

(45) Date de publication du fascicule du brevet:
**06.07.83**

(51) Int. Cl.³: **B 60 P 3/38**

(21) Numéro de dépôt: **80420097.0**

(22) Date de dépôt: **30.07.80**

(54) **Structure déployable formant abri adaptable sur le toit ou pavillon d'un véhicule automobile.**

(30) Priorité: **30.07.79 FR 7919920**

(43) Date de publication de la demande:
**04.02.81 Bulletin 81/5**

(45) Mention de la délivrance du brevet:
**06.07.83 Bulletin 83/27**

(84) Etats contractants désignés:
**AT BE CH DE GB IT LI LU NL SE**

(56) Documents cités:
**FR-A-2 158 927**
**FR-A-2 287 358**
**GB-A-1 289 294**
**GB-A-1 411 885**
**US-A-3 575 460**

(73) Titulaire: **FRALCH Société Anonyme, B.P.143 Zone Industrielle, F-26104 Romans Cedex (FR)**

(72) Inventeur: **Pillot, Bernard, 11, Avenue du Docteur Bonnet, F-26100 Romans (FR)**

(74) Mandataire: **Ropital-Bonvarlet, Claude et al, Cabinet BEAU DE LOMENIE 99, Grande rue de la Guillotière, F-69007 Lyon (FR)**

BUNDESDRUCKEREI BERLIN

# Structure déployable, formant abri, adaptable sur le toit ou pavillon d'un véhicule automobile

La présente invention est relative aux abris déployables et elle concerne, plus particulièrement, les abris du type puvant être adaptés sur le toit ou pavillon d'un véhicule automobile.

Dans le domaine ci-dessus, on connaît différents types de structures déployables. Un premier type est illustré par le brevet FR-A-2 158 927 selon lequel la coque supérieure est reliée à la coque inférieure par deux croisillons ou ciseaux disposés perpendiculairement au plan vertical longitudinal de la structure. De tels ciseaux, s'étendant parallèlement et à proximité des côtés transversaux de la structure, sont associés généralement à des compensateuers élastiques.

Une telle solution générale ne donne pas satisfaction pour les raisons suivantes.

Le premier inconvénient réside dans le fait que les ciseaux n'offrent pas une résistance mécanique convenable permettant de conférer une stabilité propre à la coque supérieure par rapport à la coque inférieure. Un autre inconvénient réside dans le fait que les ciseaux occupent les côtés transversaux de la paroi périphérique et viennent masquer en partie les overtures ménagées dans ces côtés pour l'éclairement et l'aération.

Un inconvénient supplémentaire tient au fait que les ciseaux, au cours des déplacements de la coque supérieure, soit en élévation, soit en abaissement, sont amenés à se déplacer parallèlement à toute la surface des côtés transversaux. Au moment du repliage, des problèmes de pincement et de détérioration de l'enveloppe souple se posent fréquemment.

Un second type est proposé par le brevet US-A-3 575 460, selon lequel la coque supérieure est reliée à la coque inférieure par deux systèmes articulés latéraux associés chacun à un organe moteur. Ces deux systèmes s'étendent parallèlement au plan vertical longitudinal de la structure et dégagent, ent conséquence, toute la surface des côtés transversaux.

Un tel type de construction pose un premier problème d'encombrement important dû aux systémes articulés faisant intervenir plusieurs barres pivotant relativement. Un risque de pincement et de détérioration de l'enveloppe souple est à mettre au compte d'une telle réalisation.

Un second problème tient au fait que les deux systèmes latéraux sont responsables de la position haute de la coque supérieure. Compte tenu des phénomènes de dilation de l'enveloppe périphérique, la hauteur de cette dernière est toujours supérieure à la mesure d'écartement des coques en position déployée. Il en résulte un claquement au vent avec risque de détérioration.

Un troisième problème à mettre au compte d'une telle réalisation est celui de la faible résistance au gauchissement et à la torsion des ensembles articulés qui comprennent des leviers pivotant dans le même sens pour chaque ensemble. Lorsque la structure ne fait intervenir, pour une raison de coût, que des organes de rappel en forme de vérins à ressort, les ensembles articulés ne sont pas à même alors d'assurer une bonne stabilité de la coque supérieure en position déployée.

L'objet de l'invention est justement de supprimer les inconvénients ci-Dessus en proposant une nouvelle structure dáployable formant abri et, notamment, des nouveaux moyens de support et de commande en déplacement relatif de la coque supérieure par rapport à la coque inférieure.

Par rapport au brevet US-A-3 575 460 qui décrit déjà une structure déployable formant abri adaptable sur le toit ou pavillon d'un véhicule automobile et comprenant une coque inférieure munie d'organes de fixation sur un toit, une coque supérieure reliée à la coque inférieure par une enveloppe souple périphérique, des organes de liaison pour libérer ou maintenir les deux coques re Permées l'une sur l'autre et des moyens des support et de commande du déplacement de la coque supérieure par rapport à la coque inférieure comprenant quatre ensembles articulés disposés parallélement aux côtés longitudinaux de la structure et à l'intérieur de cette dernière et associés à des organes de rappel sollicitant les ensembles en ouverture, l'invention est caractérisé en ce que ces moyens de support et de commande comprenant quatre ensembles articulés se présentant chacun sous la forme d'un organe unitaire monté à proximité d'un angle de la structure et consititué d'un compas formé de deux bras réunis entre eux par un organe de rappel sollicitant toujours les bras en ouverture relative et se trouvant disposé latéralement par rapport au plan de chaque bras, de telle manière que deux organes de rappel homologues situés d'un même côté longitudinal sont en opposition contrariée.

L'objet de l'invention est tout particulièrement conçu pour faire intervenir des moyens de commande occupant le plus faible encombrement possible et utilisant pour leur développement une surface la plus faible possible, de telle sorte que la plus grande partie de l'enveloppe périphérique peut être utilisée pour délimiter des fenêtres d'áclairement et d'aération et/ou des portes d'accès.

Un autre objet de l'invention est de conférer à la structure même, en position déployée, une très grande résistance et, motamment, une stabilité et un maintien de la coque supérieure à l'aplomb de la coque inférieure afin de upprimer les risques de détérioration, soit en cours d'utilisation, soit lorsque, par ouverture intempestive, la coque supérieure se déploie lorsque le véhicule est en roulement.

Un autre objet de l'invention est de prévoir des moyens de commande qui suppriment le déplacement relatif longitudinal de la coque supérieure par rapport à la coque inférieure, notamment dans la position d'élévation maximale, et qui permettent ainsi, lors de l'abaissement en position fermée, de réaliser une adaptation convenable des bors périphériques complémentaires des coques inférieure et supérieure.

Un autre objet de l'invention est de faire en sorte que les moyens de commande mis en oeuvre peuvent être aisément entourés et protégés relativement, de manière à représenter des ensembles de faible volume dont les éléments articulés sont séparés de l'enveloppe périphérique afin d'assurer la protection de cette dernière.

Un autre objet encore de l'invention est de faire en sorte que les moyens de commande permettent de réaliser facilement le déploiement et la fermeture de la coque supérieure par rapport à la coque inférieure, sans astreindre l'utilisateur à des manoeuvres longures, compliqués ou difficiles à exécuter.

Diverses autres caractéristiques de l'invention ressortent de la description ci-dessous faite en référence aux dessins annexés.

La fig. 1 est une élévation latérale schématique d'un véhicule automobile sur le pavillon duquel est adapté l'objet de l'invention en position fermée.

La fig. 2 est une perspective montrant la structure de l'invention en position déployée sur le toit ou pavillon d'un véhicule.

La fig. 3 est une perspective en partie arrachée montrant, à plus grande échelle, l'objet de l'invention.

La fig. 4 est une vue de dessus illustrant une particularité constructive de l'un des éléments de l'invention.

Les fig. 5 et 6 sont des élévations latérales montrant l'objet de l'invention dans deux position caractéristiques.

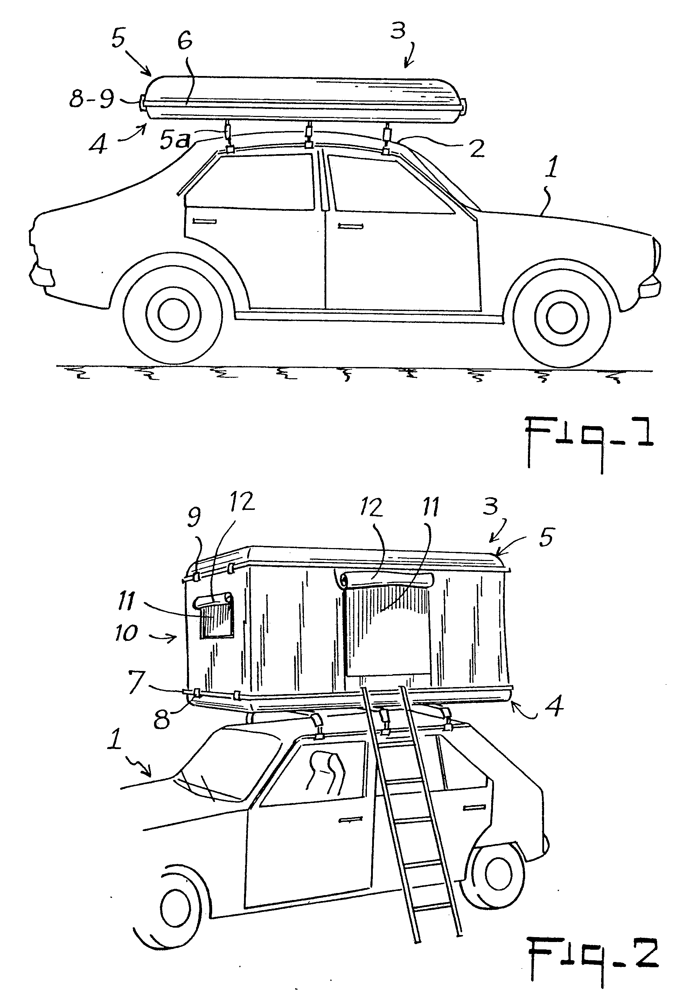

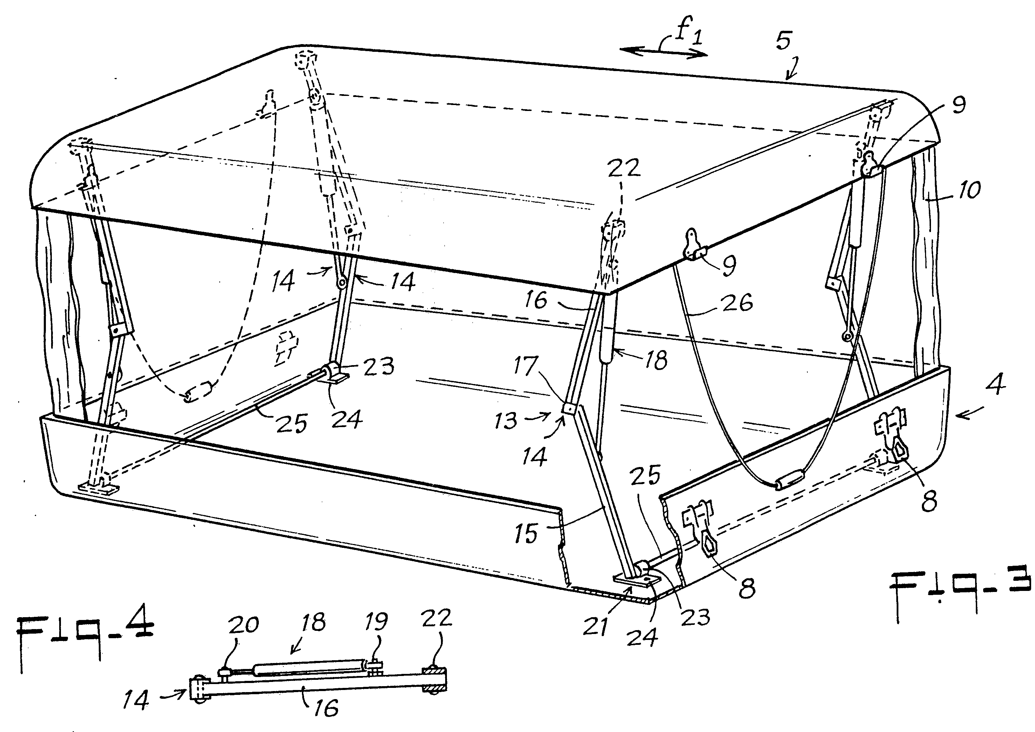

Les fig. 1 et 2 montrent un véhicule automobile 1 sur le toit ou pavillon 2 duquel est montée une structure déployable conforme à l'invention, désignée dans son ensemlbe par la référence 3. La fig. 1 montre la structure déployable 3 dans sa position fermée correspondant à l'état de roulement du véhicule et la fig. 2 illustre cette structure dans sa position déployée, c'est-à-dire utilisable en tant qu'abri dans l'état de stationnement du véhicule.

D'une façon connue, la structure déployable 3 comprend une coque inférieure 4 qui est fixée sur le toit ou pavillon 2 par l'intermédiaire d'organes de fixation 5a qu'elle comporte. Ces organes de fixation ne font pas partie directement de l'invention et sont constitués, de faòn connue, pour s'adapter par exemple sur les gouttières de pavillon ou sours les feuillures d'encadrement de portières.

La structure déployable comprend par ailleurs une coque supérieure 5 qui est orientée ou tournée en direction de la coque inférieure 4. La coque supérieure comporte un bord périphérique 6 qui est conformé de manière complémentaire au bord périphérique 7 de la coque inférieure 4 affin de permettre un emboîtement relatif dans la position fermée telle que représentée à la fig. 1. Les coques 4 et 5 so : munies sur leur périphérie d'organes complémentaires de liaison amovibles 8 et 9 qui permettent, soit de maintenir les coques 4 et 5 dans la position fermée telle que représentée à la fig. 1, ou, au contraire, de libérer la coque supérieure 5 par rapport à la coque inférieure 4.

Les deux coques sont généralement constituées par des éléments en forme, de préférence, en résine et fibres de verre, et affectent le plus généralement une forme rectangulaire analogue à un plateau possédant un bord périphérique relevé. Des moyens sont prévus pour associer ces bords périphériques relevés à une enveloppe souple 10, par exemple en tissu qui délimite le volume utile de la structure dans la position déployée, telle qu'illustrée par la fig. 2, et qui est prévue pour être placée dans le volume utile interne délimité par les rebors relevés des coques 4 et 5 lorsque ces dernières sont en position fermée. L'enveloppe souple 10 forme une paroi périphérique dans laquelle sont délimitées des ouvertures 11 représentant, soit des fenêtres d'éclairement et d'aération, soit une porte d'accès, et qui peuvant être obturées par des panneaux mobiles 12.

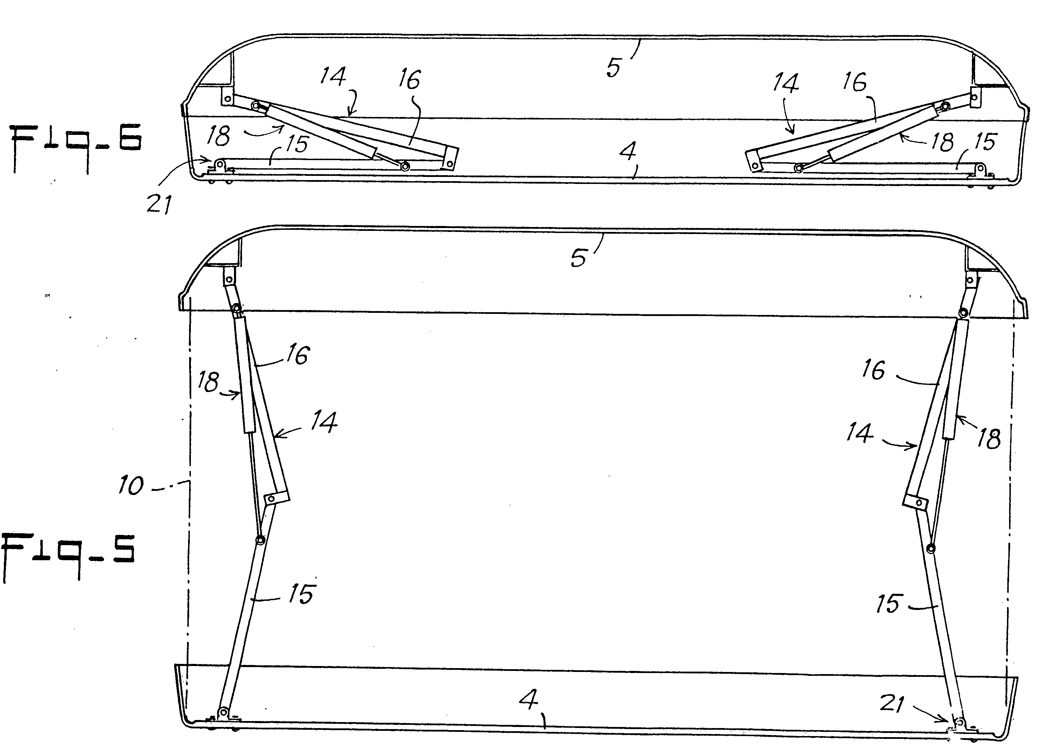

Conformént à l'invention, la structure déployable illustrée plus en détail à la fig. 3, est complétée par des moyens 13 prévus pour commander le déplacement relatif ascendant ou descendant de la coque supérieure 5 par rapport à la coque inférieure 4 et pour maintenir ladite coque 5 en élévation par rapport à la coque inférieure lorsque la structure est utilisée dans son état d'abri déployé.

Selon l'invention, les moyens 13 sont constitués par quatre ensembles 14 qui comprennent chacun, comme représenté aux fig. 3 et 4, un compas constitué par deux bras 15 et 16 reliés entre eux par une articulation 17 joignant les extrémités en regard. Les bras articulés 15 et 16 peuvent être réalisés de plusieurs façons convenables et, notamment, par des segments tubulaires à section droite transversale circulaire ou polygonale. Les bras articulés 15 et 16 de chaque ensemble 14 sont réunis entre eux par un organe de rappel 18 conçu pour tendre à solliciter toujours lesdits bras en ouverture relative. L'organe de rappel 18 est disposé, selon une caractéristique de l'invention, pour être situé parallèlement au plan commun des bras 15 et 16 sur lesquels il est adapté latéralement par des articulations 19 et 20. De préférence, l'organe de rappel est constitué par un vérin du type à gaz, mais des solutions techniques équivalentes peuvent être envisagées et, notamment, il peut être prévu de monter un vérin du type hydraulique ou un vérin à ressort.

Dans ces cas de construction, le corps ou cylindre du vérin est, de préférence, monté par l'articulation 19 sur le bras 16, tandis que la tige est reliée par l'articulation 20 au bras 15.

Le montage des ensembles 14 est effectué de manière que les bras 15 soient montés par des articulations 21 sur le fond de la coque inférieure 4, tandis que les bras 16 sont montés par des articulations 22 sur la face inférieure du dessus de la coque supérieure 5. Selon une disposition de l'invention, le montage des ensembles 15 s'effectue aussi pour que le plan général de chaque ensemble soit situé parallèlement aux ôtés longitudinaux de la structure et, plus particulièrement, parallèlement à l'axe de la structure situé parallèlement à l'axe de roulement du véhicule et plus particulièrement ici parallèlement aux côtés longitudinaux. En outre, le montage s'effectue à proximité de chaque angle délimité avec le côté correspondant contigu pour que les bras 15 et 16 soient en outre situés parallèlement aux rebords des coques et que les organes de rappel 18 soient au contraire dirigés des coques et que les organes de rappel 18 soient au contraire dirigés vers l'intérieur du volume délimité par la structure. En outre, de préférence, le montage est également effectué pour que les ensembles 14 homologues correspondant à un même côté longitudinal de la structure soient opposés par leur articulation médiane 17, c'est-à-dire que chaque organe de rappel 18 est alors dirigé face au côté transversal lorsque la structure adopte une conformation générale parallélipipédique.

Lorsque les organes de liaison amovibles 8 et 9 sont libérés, les quatre organes de rappel 18 agissent simultanément et sollicitent l'élévation progressive de la coque supérieure 5 par rapport à la coque inférieure 4. La fig. 6 montre que dans la position fermée, les différents ensembles ne sont pas totalement repliés, mais sont au contraire placés dans un état tel que les bras articulés 15 et 16 forment entre eux un angle aigu. Dans cette position, l'action des organes de rappel 18 peut se développer et provoquer la sollicitation en ouverture des bras 15 et 16 et, par suite, l'élévation de la coque supérieure jusque dans la position illustrée par la fig. 5. Au cours de ce déplacement, la paroi périphérique ou enveloppe 10 se déploie progressivement pour être amenée à l'état tendu tel qu'illustré en traits mixtes à la fig. 5

Au cours de ce déplacement, on constante, par comparaison des fig. 5 et 6, que les ensembles articulés 14 balayent une surface de déploiement relativement faible située parallèlement aux côtés longitudinaux de la structure de forme générale parallélipipédique, de sorte qu'il peut être prévu de ménager éventuellement dans les deux côtés longitudinaux de l'enveloppe 10 des ouvertures 11 formant fenêtres ou portes d'accès. En outre, on constate également, par référence à la fig. 3, que les côtés transversaux d'une telle structure sont totalement dégagés, de sorte qu'il est possible également de délimiter dans les parties correspondantes de l'enveloppe 10 des ouvertures 11 d'aération et d'éclairement.

Un autre avantage particulièrement important de la disposition conforme à l'invention réside dans le fait que l'orientation initiale des ensembles 14 a pour effet de placer les organes de rappel 18 parallèlement au plan longitudinal de la structure, mais de telle façon que les organes 18 homologues correspondant à un même côté sont en opposition contrariée. Ceci permet d'assurer le maintien stable de la coque supérieure 5 à l'aplomb de la coque inférieure 4 en évitant tout risque de possibilité de débattement relatif dans l'un ou l'autre des sens de la flèche $f_1$, c'est-à-dire parallèlement au plan longitudinal de la structure. Cet avantage de construction est important car la structure possède une résistance mécanique particulièrement élevée dans sa position déployée et peut supporter des contraintes d'utilisation qui, dans les cas de construction traditionelle connus, ont pour résultat de déformer les moyens supports et de perturber l'emoîtement facile, rapide et automatique des bors complémentaires en regard des coques 4 et 5. Un autre avantage du même ordre réside dans le fait qu'en cas d'ouverture intempestive de la structure déployable lorsque le véhicule est en roulement, la coque supérieure 5 et l'enveloppe périphérique 10 sont à même de résister à la poussée du vent relatif. En effet, une telle poussée tend à provoquer l'extension supplémentaire des organes de rappel 18 qui occupent déjà une position d'extension maximale des tiges télescopiques, de sorte qu'il en résulte une sécurité accrue.

Un autre avantage de la disposition constructive réside dans le fait que les organes de rappel 18 sont disposés latéralement au plan de chaque bras 15 et 16, de sorte que chaque ensemble 14 présente une plus grande résistance au gauchissement et à la torsion. Il en résulte une meilleure tenue de la coque supérieure 5 aux sollicitations s'exerçant selon une direction perpendiculaire à celle de la flèche $f_1$.

Un autre avantage de cette construction réside dans le fait que les organes de rappel 18 sont orientés vers l'intérieur du volume délimité, ce qui réduit notablement les risques de pincement de l'enveloppe 10 lors d'une phase d'abaissement en vue de la fermeture de la coque supérieure 5 sur la coque inférieure 4.

Bien que cela ne soit pas représenté, il y a lieu de noter également que chaque ensemble articulé se présente sous la forme d'un organe unitaire permettant la mise en place d'une gaine ou d'un manchon protecteur entourant les bras et l'organe de rappel en position d'ouverture et supprimant encore les risques de pincement de l'enveloppe 10 lors des opérations d'abaissement de la coque supérieure 5.

Selon une autre disposition constructive de l'invention, il est prévu de réaliser les articulations 21 inférieures de chaque ensemble 14 sous la forme d'un palier 23 porté par une platine 24. Les paliers 23 correspondant aux ensembles 14 situés parallèlement à un côté transversal, dans le cas de réalisation de la structure sous une forme parallélépipédique, sont alignés de manière à assurer le centrage et le support d'un arbre d'accouplement 25 aux extrémités desquelles sont fixés les bras 15 correspondant. Cette disposition est prévue de manière à réaliser un accouplement des fonctions d'ouverture des ensembles 14 sous l'effet des organes de rappel 18, de manière à obtenir une ouverture simultanée des bras 15 et 16 pour chaque côté transversal et éviter de la sorte tout risque de gauchissement et de vrillage qui serait susceptible d'entraîner la détérioration de l'un des ensembles articulés.

26 désigne au moins un organe de traction qui est accroché à l'enveloppe supérieure 5, par exemple au niveau de chacun des côtés transversaux et sur lequel l'utilisateur exerce une traction lorsqu'il souhaite ramener en position basse la coque supérieure 5 contre l'action des organes de rappel 18 qui, au cours de cette phase de fonctionnement, emmagasine le travail qu'ils restitueront pour commander l'ouverture automatique de ladite coque lors d'une phase de déploiement de la structure en vue de son utilisation. Dans ce but, les organes de rappel 18 sont choisis pour que leur action commune soit à même de provoquer l'élévation automatique de la coque supérieure et le déploiement de la paroi périphérique.

## Revendications

1. Structure déployable formant abri adaptable sur le toit ou pavillon d'un véhicule automobile et comprenant une coque inférieure (4) munie d'organes (5a) des fixation sur un toit, une coque supérieure (5) reliée à la coque inférieure par une enveloppe souple périphérique (10), des organes de liaison (8—9) pour libérer ou maintenir les deux coques refermées l'une sur l'autre et des moyens (13) de support et de commande du déplacement de la coque supérieure par rapport à la coque inférieure comprenant quatre ensembles articulés (14) disposés parallèlement aux côtés longitudinaux de la structure et à l'intérieur de cette dernière et associés à des organes de rappel (18) sollicitant les ensembles en ouverture, caractérisée en ce que chaque ensemble articulé (14) se présente sous la forme d'un organe unitaire monté à proximité d'un angle de la structure et constitué d'un compas formé de deux bras (15—16) réunis entre eux par l'organe de rappel (18) sollicitant toujours les bras en ouverture relative et se trouvant disposé latéralement par rapport au plan de chaque bras, de telle manière que deux organes de rappel homologues situés d'un même côté longitudinal soient en opposition contrariée.

2. Structure selon la revendication 1, caractérisée en ce que les ensembles articulés (14) situés d'un même côté longitudinal se font face par l'articulation mutuelle (17) entre les bras (15—16) les constituant.

3. Structure selon la revendication 1, caractérisée en ce que l'organe de rappel (18) est constitué par un cylindre à gaz.

4. Structure selon la revendication 1, caractérisée en ce que l'organe de rappel (18) est constitué par un cylindre associé à un ressort réglable.

5. Structure selon la revendication 1 ou 2, caractérisée en ce que chaque ensemble (14) est associé à une gaine ou enveloppe souple entourant les bras (15, 16) et l'organe de rappel (18) en position d'ouverture.

6. Structure selon la revendication 1 ou 2, caractérisée en ce que les ensembles (14) homologues situés de part et d'autre de l'axe de la structure, parallèle à l'axe d'avancement du véhicule, sont associés par une barre d'accouplement (25).

7. Structure selon la revendication 1 ou 2, caractérisée en ce que les ensembles articulés (14) assument, en position déployée, une fonction de support de la coque supérieure (5) ainsi qu'une fonction de mise sous tension de l'enveloppe périphérique souple (10).

8. Structure selon la revendication 1, caractérisée en ce que des organes de traction (26) sont fixés sur les côtés de la coque supérieure (5) qui sont perpendiculaires à l'axe de la structure elle-même parallèle à l'axe d'avancement du véhicule.

## Patentansprüche

1. Entfaltbare Struktur als Unterkunft auf dem Dach oder Aufbau eines Kraftfahrzeugs, mit einer unteren Schale (4) einschließlich Organen (5a) zur Befestigung auf dem Dach, mit einer oberen Schale (5), die über eine weiche Umfangshülle (10) mit der unteren Schale verbunden ist, mit Verbindungsorganen (8, 9) zum Freigeben oder Geschlossenhalten der beiden Schalen und mit einer Einrichtung (13) zur Halterung und Bewegungssteuerung der oberen Schale gegenüber der unteren Schale, einschließlich vier gelenkiger Anordnungen (14), die parallel zu den Längsseiten des Struktur und innerhalb der letzteren angeordnet und mit Rückstellorganen (18) verbunden sind, die die Anordnungen (14) in Öffnungsstellung beaufschlagen, dadurch gekennzeichnet, daß jede gelenkige Anordnung (14) als Einheitsorgan vorliegt, daß in der Nähe eines Winkels der Struktur befestigt ist und aus einem Scherenglied besteht, das durch zwei Arme (15, 16) gebildet ist, die untereinander durch ein Rückstellorgan (18) verbunden sind, das die Arme ständig in gegenseitige Öffnungsstellung beaufschlagt und bezüglich der Ebene jedes Arms seitlich derart angeordnet ist, daß zwei auf derselben Längsseite befindliche gleichartige Rückstellorgane einander gegensinnig gegenüberliegen.

2. Struktur nach Anspruch 1, dadurch gekennzeichnet, daß die auf derselben Längsseite befindlichen gelenkigen Anordnungen (14) mit dem Gelenk (17) einander zugewandt sind, das zwischen den sie bildenden Armen (15, 16) angeordnet ist.

3. Struktur nach Anspruch 1, dadurch gekennzeichnet, daß das Rückstellorgan (18) durch einen Gaszylinder gebildet ist.

4. Struktur nach Anspruch 1, dadurch gekennzeichnet, daß das Rückstellorgan (18) durch einen mit einer einstellbaren Feder vereinigten Zylinder gebildet ist.

5. Struktur nach Anspruch 1 oder 2, dadurch gekennzeichnet, daß jede Anordnung (14) mit einer weichen Hülle oder einem weichen Mantel vereinigt ist, der die Arme (15, 16) und das Rückstellorgan (18) umgibt.

6. Struktur nach Anspruch 1 oder 2, dadurch gekennzeichnet, daß die gleichartigen Anordnungen (14), die beiderseits der zur Fahrtrichtung des Fahrzeugs parallelen Achse der Struktur angeordnet sind, durch einen Verbindungsstab (25) miteinander verbunden sind.

7. Struktur nach Anspruch 1 oder 2, dadurch gekennzeichnet, daß die gelenkigen Anordnungen (14) in der entfalteten Stellung eine Tragfunktion für die obere Schale (5) und auch eine Spannfunktion für die weiche Umfangshülle (10) übernehmen.

8. Struktur nach Anspruch 1, dadurch gekennzeichnet, daß Zugorgane (26) an den Seiten der oberen Schale (5) befestigt sind, die zu der zur Fahrtrichtung des Fahrzeugs parallelen Achse der Struktur senkrecht sind.

**Claims**

1. Expandable structure forming shelter, adaptable on the roof part of a motor-vehicle and comprising a lower shell (4) provided means (5a) to fasten it on to a roof, an upper shell (5) joined to the lower shell by a supple peripheral enclosure (10), connecting members (8—9) to release the two shells or to keep them closed one over the other, and means (13) supporting and controlling the movement of the upper shell with respect to the lower shell, which means consist of four hinged assemblies (14) placed in parallel to the longitudinal sides of the structure and inside thereof, and associated to return members (18) pulling the said assemblies open, characterised in that each hinged assembly (14) is in the form of a unit element mounted close to an angle of the structure and constituted of struts formed by two arms (15—16) joined together by the return member (18) alway pulling the arms relatively open so that two homologous return members situated on the same longitudinal side are in alternated opposition.

2. Structure according to claim 1, characterised in that the hinged assemblies (14) situated on the same longitudinal side face one another via the joint articulation (17) between the arms (15—16) constituting them.

3. Structure according to claim 1, characterised in that the return member (18) is constituted by a gas cylinder.

4. Structure according to claim 1, characterised in that the return member (18) is constituted by a cylinder associated to an adjustable spring.

5. Structure according to claim 1 or 2, characterised in that each assembly (14) is associated to a supple sleeve or enclosure surrounding the arms (15—16) and the return member (18) in the open position.

6. Structure according to claim 1 or 2, characterised in that the homologous assemblies (14) situated on either sides of the axis of the structure, in parallel to the advancing axis of the vehicle, are coupled together by a connecting bar (25).

7. Structure according to claim 1 or 2, characterised in that the hinged assemblies (14) act, in the expanded position, as support for the upper shell (5) and also as means for stretching the supple peripheral enclosure (10).

8. Structure according to claim 1, characterised in that tracting members (26) are fixes on the sides of the upper shell (5) which are perpendicular to the axis of the structure, which latter is parallel to the advancing axis of the vehicle.

Fig-1

Fig-2

Fig-4

Fig-3

0 023 466

Fig-6

Fig-5